Europäisches Patentamt

European Patent Office

Office européen des brevets

(19)

(11) Publication number: **0 189 133 B1**

# EUROPEAN PATENT SPECIFICATION

(12)

(45) Date of publication of patent specification: **26.06.91** (51) Int. Cl.⁵: **G21C 3/32**

(21) Application number: **86100569.2**

(22) Date of filing: **17.01.86**

(54) **Apparatus and method for preassembling a top nozzle subassembly for a nuclear fuel assembly.**

(30) Priority: **25.01.85 US 695131**

(43) Date of publication of application:
**30.07.86 Bulletin 86/31**

(45) Publication of the grant of the patent:
**26.06.91 Bulletin 91/26**

(84) Designated Contracting States:
**BE DE FR GB IT SE**

(56) References cited:
**EP-A- 0 138 606**
**DE-A- 2 515 572**
**US-A- 3 770 583**
**US-A- 4 219 386**
**US-A- 4 321 111**

(73) Proprietor: **WESTINGHOUSE ELECTRIC COR-**
**PORATION**
**Westinghouse Building Gateway Center**
**Pittsburgh Pennsylvania 15235(US)**

(72) Inventor: **Gjertsen, Robert Kenneth**
**126 Penn Lear Drive**
**Monroeville Pennsylvania 15146(US)**
Inventor: **Wilson, John Francis**
**3560 Meadowgate Drive**
**Murrysville Pennsylvania 15668(US)**

(74) Representative: **Patentanwälte Dipl.-Ing. R.**
**Holzer Dipl.-Ing. (FH) W. Gallo**
**Ludwigstrasse 26**
**W-8900 Augsburg(DE)**

# Description

This invention relates generally to fuel assemblies for nuclear reactors and, more particularly, to an apparatus for preassembling top nozzles for use with such fuel assemblies.

The core portion of a nuclear reactor ordinarily includes a large number of elongate fuel elements, or rods, which are grouped and supported in frameworks known as fuel assemblies. Generally, a fuel assembly is an upright structure in which the fuel rods and control-rod guide thimbles are held in an organized array by means of grids spaced axially along the fuel assembly and affixed to the guide thimbles, and which structure includes upper and lower nozzles secured to opposite end portions of the guide thimbles. Within the reactor core, the fuel assemblies receive support and proper alignment from upper and lower core support plates which are directly or indirectly connected to a support barrel surrounding the reactor core and extending axially between the opposite ends thereof.

The materials used in the support structures of fuel assemblies on the one hand and in the core support barrels on the other are of different kinds having different thermal expansion characteristics. Therefore, and due to the considerable length of some of the structural components employed, the difference in axial thermal expansion between the fuel assembly and core barrel structures can be quite significant at the high temperatures experienced in a reactor core during operation. In order to accommodate such axial expansion differential between fuel assemblies and core support barrel, it is customary to space the upper and lower core support plates apart a distance exceeding the axial length of the fuel assemblies, and with a gap usually left between the upper core support plate and the fuel assemblies.

Most reactors are cooled by directing a liquid coolant, such as water, upward through apertures in the lower core support plate and along the fuel rods of the various fuel assemblies to receive thermal energy therefrom. Due to the structural configuration of fuel assemblies, the coolant may experience a significant pressure drop in passing through the core region, which pressure drop produces a force tending to lift the fuel assemblies. Although there may be instances where the weight of the fuel assembly is sufficient to overcome the hydraulic lifting forces under all operating conditions, more often than not this is not the case, especially at times when the coolant density is high, such as at reactor start-up, and when coolant flow rates are high. When the hydraulic lifting forces acting upon a particular fuel assembly exceed the weight of the fuel assembly, the latter assembly will tend to move upward and against the upper core plate. Such upward motion of the fuel assembly, if uncontrolled, may result in damage to the fuel assembly and the fuel rods or to the upper core plate and, therefore, must be avoided, which usually is done with the aid of a hold-down device adapted to prevent the upwardly flowing coolant from moving the fuel assembly forcibly against the upper core support plate of the reactor while allowing for changes in the fuel assembly length due to core-induced thermal expansion and the like. Such hold-down devices are disclosed in U.S. patent specifications Nos. 3,379,619; 3,770,583; and, 4,192,719, for example.

A recent fuel assembly design having a top nozzle subassembly which includes hold-down means is disclosed in European patent application No. 84307049.1 (Publication No. 0138606) as including an upper bearing plate, a lower adapter plate, a plurality of guide thimble extension tubes extending between and through the plates, and a plurality of coil springs encircling the extension tubes and held partially compressed between the plates by a pair of retainers on the extension tubes, one of which retainers is a collar attached to the respective extension tube below the adapter plate so as to limit downward sliding movement of the adapter plate along the extension tube, and the other of which retainers is attached to an upper end portion of the respective extension tube and is lodged within a passageway in the bearing plate where it cooperates with an internal ledge to limit upward movement of the bearing plate along the extension tube. This top nozzle subassembly consists of a large number of components which must be assembled with precision in order that the subassembly can function properly when applied to the guide thimbles of a fuel assembly.

It is the principal object of the invention to provide ways and means enabling the components of a top nozzle with hold-down means to be preassembled into a complete subassembly with the required degree of precision reliably yet with relative ease and in a manner accommodating tolerance mismatches.

Accordingly, the invention provides an apparatus for preassembling a top nozzle subassembly for mounting on a plurality of guide thimbles of a fuel assembly, which preassembling apparatus comprises: (a) a base having a plurality of bores defined therein in a pattern which matches that of the guide thimbles, each of the bores being adapted to receive a lower end of one of a plurality of guide-thimble extension tubes; (b) compliant means disposed in the bores of the base and yieldable so as to support the extension tubes individually for vertical movement when the tubes are slidably received through respective holes defined in a lower adapter plate in a pattern matching that of the guide thimbles, said extension tubes having thereon respective lower retainers attached thereto below the adapter plate so as to limit downward slidable movement of the adapter plate along the extension tubes, and the extension tubes are allowed to vertically move independently of one another until their respective lower retainers are brought individually into engagement with a lower surface of the adapter plate for supporting the latter uniformly on all of the lower retainers; (c) locating means insertable through passageways defined in an upper bearing plate in a pattern matching that of the guide thimbles, and insertable into upper end portions of the extension tubes, thereby to align the passageways individually with the respective extension tubes and to guide the upper ends of the extension tubes into the passageways when the bearing plate is supported on a plurality of coil springs disposed about the respective extension tubes and seated on the lower adapter plate, and when the bearing and adapter plates are moved relative to each other toward one another against the bias of the coil springs; and (d) loading means operable to generate a force effecting relative movement of the upper bearing and lower adapter plates toward one another, thereby to compress the coil springs therebetween and at the same time introduce upper end portions of the extension tubes into the passageways of the bearing plate for attachment of said upper end portions to upper retainers cooperating with the bearing plate so as to limit upward movement thereof relative to the extension tubes and thereby maintain the coil springs in a state of compression.

The preassembling apparatus includes further orienting means disposed between the base and the lower surface of the adapter plate to ensure that each extension tube and its respective lower retainer are disposed in a desired angular position in which peripheral scallops on the lower retainer are axially aligned with fuel rods of the fuel assembly where the top nozzle subassembly is mounted thereon.

The invention also provides a method for preassembling the top nozzle subassembly, comprising the steps of: (a) yieldably supporting a plurality of guide thimble extension tubes individually at their respective lower ends for vertical movement when the tubes are slidably received through respective holes defined in a lower adapter plate in a pattern which matches that of the guide thimbles and with lower retainers attached to the respective tubes below the adapter plate so as to limit downward slidable movement of the adapter plate along the extension tubes, whereby the extension tubes are allowed to vertically move independently of one another until their respective lower retainers are brought individually into engagement with a lower surface of the adapter plate so as to support the latter uniformly on all of the lower retainers; (b) aligning individual passageways, defined in an upper bearing plate in the pattern which matches that of the guide thimbles with the upper ends of the respective extension tubes; (c) guiding upper end portions of the extension tubes into the passageways when the upper bearing plate is supported on a plurality of coil springs disposed about the respective extension tubes and on the lower adapter plate, and when the bearing and adapter plates are moved relative to and toward one another against the bias of the coil springs so as to compress the latter; and (d) generating a loading force which causes relative movement of the upper bearing and lower adapter plates toward one another and compression of the coil springs therebetween, whereby the upper end portions of the extension tubes are brought into the passageways of the upper bearing plate for attachment thereof to upper retainers for limiting upward movement of the bearing plate relative to the extension tubes.

The loading force generating step includes generating several separate loading force components at each lateral side of the upper bearing plate such that a leveling adjustment of the position of the upper bearing plate relative to the lower adapter plate can be made concurrently as the springs are compressed between the lower adapter and upper bearing plates.

A preferred embodiment of the invention will now be described, by way of example only, with reference to the accompanying drawings, in which:

Figure 1 is a partially sectioned elevational view, with parts being broken away for clarity, of a fuel assembly including a preassembled top nozzle subassembly;

Fig. 2 is a top plan view of the top-nozzle preassembling apparatus embodying the invention, with an upper cruciform loading plate of the apparatus shown as resting on the upper bearing plate of the top nozzle, and with portions of the top nozzle components broken away to expose lower retainers on guide-thimble extension tubes;

Fig. 3 is a side elevational view of the top nozzle preasembling apparatus as seen when viewed in the direction of the arrows on line 3--3 of Fig. 2, showing the apparatus prior to preloading of compression springs between the upper bearing and lower adapter plates of the top nozzle;

Fig. 4 is a side elevational view similar to Fig. 3 but showing the apparatus after preloading of the compression springs;

Fig. 5 is a side view of a locating pin as used with the preassembling apparatus for aligning the upper end of a guide-thimble extension tube with an associated passageway in the upper bearing plate, as seen in Fig. 3; and

Fig. 6 is a bottom plan view of a lower orientation plate forming part of the preassembling apparatus.

In the following description, like reference characters designate like or corresponding parts throughout the several views of the drawings, and terms such as "forward", "rearward", "left", "right", "upwardly", "downwardly",and the like are employed as words of convenience not to be construed as limiting terms.

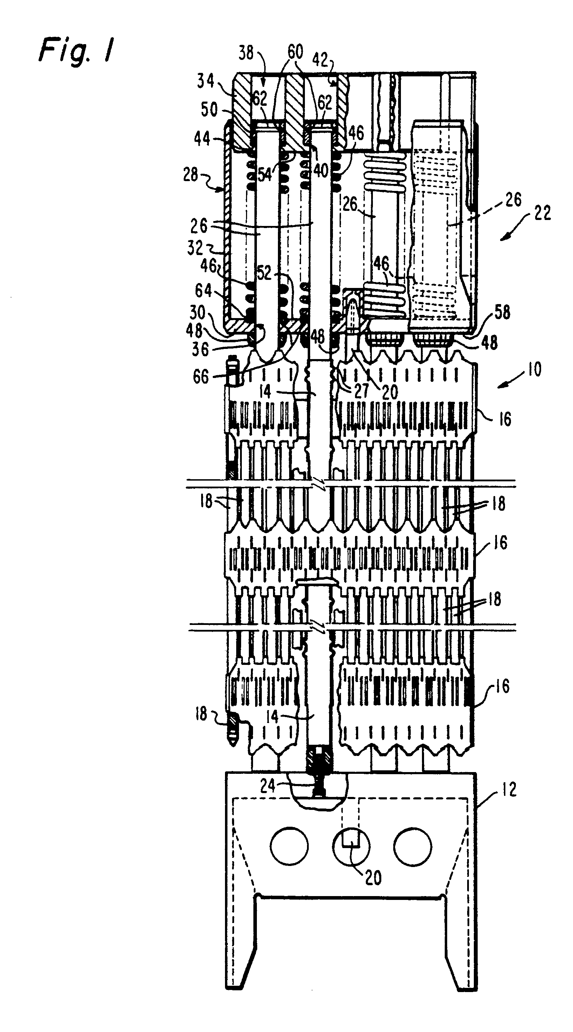

Referring now to the drawings and particularly to Fig. 1 thereof, the fuel assembly shown therein and designated generally with reference numeral 10 comprises a lower end structure or bottom nozzle 12 for supporting the fuel assembly on the lower core plate (not shown) in the core region of a reactor (not shown), several control-rod guide tubes or thimbles 14 projecting longitudinally upward from the bottom nozzle 12, a plurality of transverse grids 16 axially spaced along the guide thimbles 14, an organized array of elongate fuel rods 18 transversely spaced and supported by the grids 16, an instrumentation tube 20 located in the center of the fuel assembly, and an upper end structure or top nozzle 22 attached to the upper ends of the guide thimbles 14. The fuel assembly thus constructed forms an integral unit capable of being conventionally handled without damage to its component parts.

The fuel assembly 10 is formed by attaching the transverse grids 16 to the guide thimbles 14 at predetermined axially spaced locations, then inserting the fuel rods 18 through the grids 16 from below, thereafter securing the lower nozzle 12 to the lower ends of the guide thimbles 14 in a suitable manner, such as by means of machine screws 24, and finally attaching the top nozzle 22, forming a subassembly, to the upper ends of the guide thimbles 14, adapted, as well known in the art, to receive axially movable control rods (not shown) or the like when in use.

In the embodiment illustrated herein, each of the control-rod guide thimbles 14 has connected to its upper end a separate extension tube 26 which is coaxial with the guide thimble 14, has a diameter similar to that of the guide thimble, and preferably is fastened to an upper end portion of the guide thimble by means of a suitable mechanical joint, such as one of more bulge fittings 27 of the kind well known in the art.

The extension tubes 26 together with the components of the top nozzle 22 form a complete subassembly preassembled, prior to being applied to the guide thimbles 14, by means of the apparatus embodying the invention. This subassembly, consisting of the top nozzle 22 together with hold-down means and the extension tubes 26, comprises an enclosure 28 formed by a lower adapter plate 30 and a continuous sidewall 32 extending upward from the periphery of the adapter plate, and an upper hold-down or bearing plate 34 slidably received in an upper portion of the enclosure 28. The lower adapter plate 30 has therethrough a plurality of holes 36 which correspond in number to the extension tubes 26 needed to match with the guide thimbles 14 of the fuel assembly 10, which furthermore are sized to slidably receive the extension tubes 26, and which are arranged in accordance with the array of guide thimbles 14 desired to have extension tubes 26 attached thereto. The upper bearing plate 34 is substantially thicker than the lower adapter plate 30, and it has therethrough a plurality of passageways 38 arrayed so as to be axially aligned with the respective holes 36 when the bearing plate 34 is in place for receiving the extension tubes 26. Each passageway 38 is formed by a bore 40 having a diameter enabling the associated extension tube to slidably extend through the bore, and a coaxial counterbore 42 larger in diameter than the bore 40, the transition between the bore 40 and the counterbore 42 defining an upwardly facing internal ledge 44.

The top nozzle 22 includes further as many coil springs 46 and as many pairs of lower and upper retainers 48, 50 as there are extension tubes 26. Each coil spring 46 is disposed around the associated extension tube 26 and extends between the upper surface 52 of the adapter plate 30 and the lower surface 54 of the bearing plate 34. The lower and upper retainers 48, 50 of the various pairs are affixed to the respective extension tubes 26 and they coact with the adapter and bearing plates 30, 34, respectively, in such manner as to hold the coil springs 46 in a state of partial compression.

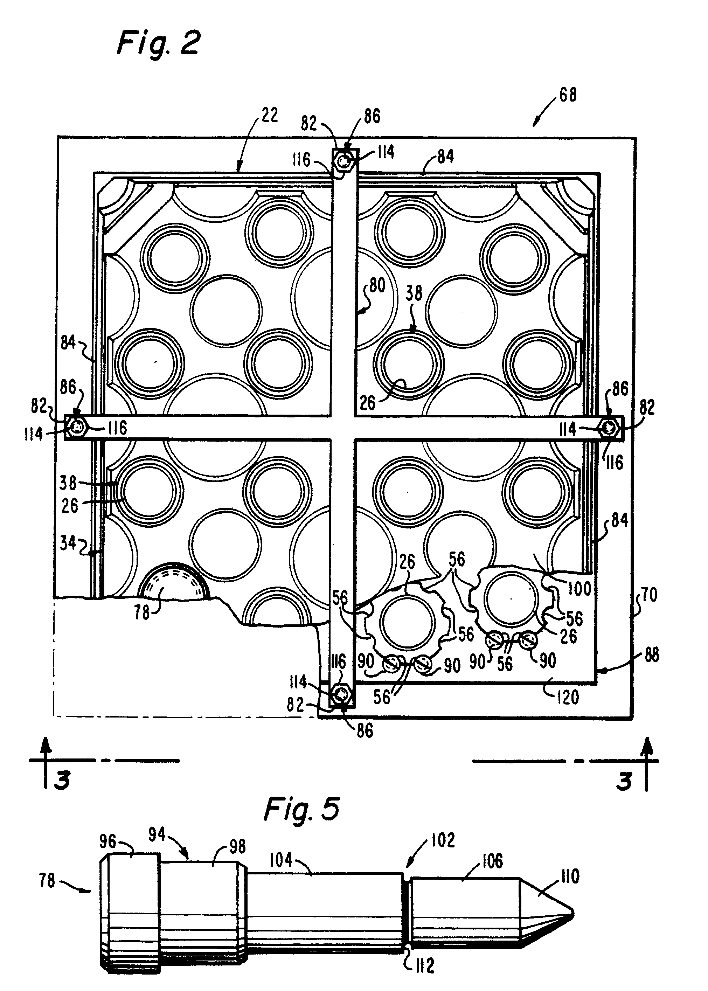

More particularly, each lower retainer 48, being in the form of a collar, is affixed, such as by brazing, to one of the extension tubes 26 at a level below the adapter plate 30 so as to limit downward sliding movement of the adapter plate 30 along the tube 26. If, as shown in the illustrated embodiment, the collars 48 have a diameter large enough to overlie fuel rod positions in the fuel assembly, they are provided with peripheral scallops 56 (Fig.2) in order to enable the respective fuel rods 18 therebeneath to be removed and replaced during reconstitution of the fuel assembly. Each upper retainer 50, likewise in the form of a collar, encircles an upper end portion of the extension tube 26 and is sized to fit in the counterbore 42 of the associated passageway 38 in the upper bearing plate 34, the upper retainer 50 having an internal annular groove 60 and being affixed to the extension tube 26 by circumferentially bulging an annular portion 62 of the tube 26 into the annular groove 60. Engaging the internal ledge 44 within the passageway 38, the upper retainer 50 limits the upward sliding movement of the bearing plate 34 along the extension tube 26. In order to maintain each coil spring 46 in coaxial alignment with the associated extension tube 26 and thereby prevent it from making physical contact with it, each coil spring 46 is provided adjacent its lower end with a seating member 64 which is seated in a counterbore 66 formed in the upper surface 52 of the adapter plate 30 concentrically with respect to the hole 36 having the tube 26 extending therethrough.

From the preceding description, it will be apparent that the top nozzle 22 consists of many individual components assembled together. For instance, the particular fuel assembly 10 illustrated in Figs. 1 through 4 is of a type having a square array of fuel rods 18 with sixteen control-rod guide thimbles 14 strategically arranged among them; consequently, there are sixteen extension tubes 26, one enclosure 28, one bearing plate 34, sixteen coil springs 46, sixteen lower retainers 48, sixteen upper retainers 50, and sixteen spring seats 64. In order to permit all of these components to be properly assembled into a complete subassembly reliably and with relative ease, the top-nozzle preassembling apparatus embodying the invention has been provided which will now be described in detail.

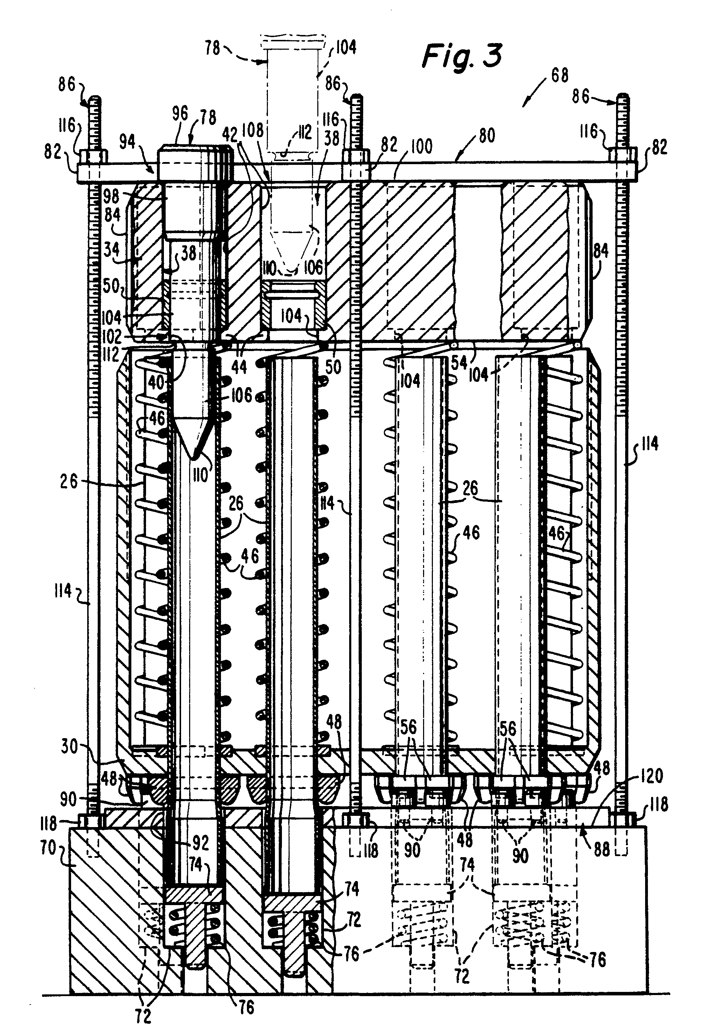

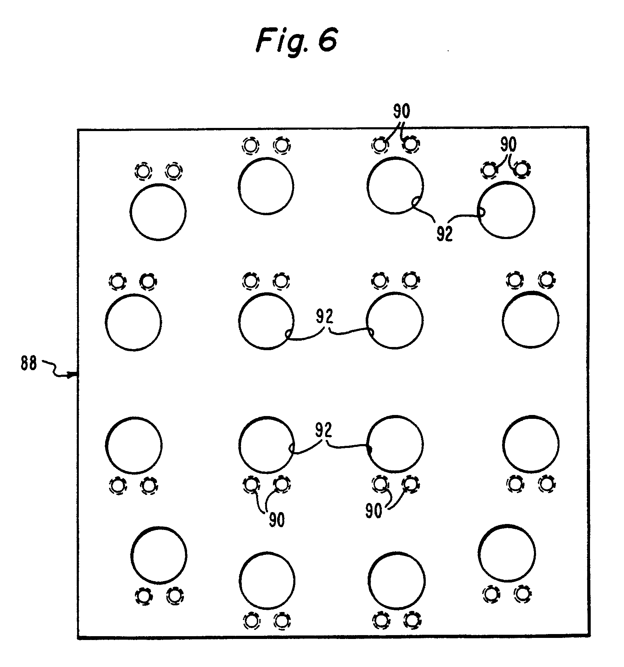

Referring particularly to Figs 2 to 4, the top-nozzle preassembling apparatus, designated generally with numeral 68, includes a generally rectangular platform or base 70 which has a plurality of bores 72 formed therein in a pattern matching the one of the guide thimbles 14 in the fuel assembly 10, and compliant means in the form of spring-loaded pistons 74 disposed and guided for axial movement within the respective bores 72, each of which latter has seated therein a helical spring 76 yieldingly supporting the associated piston 74. The apparatus 68 includes further locating means in the form of a plurality of pins 78 (also seen in Fig. 5) which are insertable through the respective passageways 38 of the bearing plate 34 and into upper end portions of the respective extension tubes 26 so as first to axially align the passageways 38 individually with the associated extension tubes 26 and then to guide the upper end portion of the latter into the respective passageways 38 associated therewith. The apparatus 68 also includes loading means comprising a cruciform loading plate 80 (see also Fig. 2), and adjustable means 86 for actuating the loading plate 80. When placed upon the bearing plate 34 as shown in Figs. 2 and 3, the cruciform plate 80 has end portions 82 thereof extending beyond the lateral sides 84 of the bearing plate, the adjustable means 86 cooperating with the end portions 82 of the loading plate 80 to interconnect the latter with the base 70, and being individually adjustable so as to apply a separate loading force component at each lateral side of the bearing plate 34 for leveling the latter as it is being advanced toward the adapter plate 30 against the action of the coil springs 46. Finally, the preassembling apparatus 68 includes orientation means in the form of a generally rectangular orientation plate 88 (see also Fig. 6) adapted to be interposed between the base 70 and the adapter plate 30, and at least two aligning pins 90 disposed on and extending upward from the orientation plate 88 adjacent each of a plurality of openings 92 formed through the orientation plate 88 to enable the respective extension tubes 26 to extend therethrough. As seen from Fig. 2, the pins 90 cooperate with the scallops 56 in the lower retainers 48 so as to place the latter and, hence, the scallops in predetermined angular positions, for a purpose to be described later herein.

In order to assure proper assemblage of the top nozzle components, at least three interface requirements must be met. First, all of the lower retainers 48 affixed to the extension tubes 26 must be in physical contact with the lower surface of the adapter plate 30 in order to assure against load maldistribution. Second, all of the extension tubes 26 must be inserted simultaneously into the passageways 38 of the bearing plate 34 as the bearing plate is lowered in place within the enclosure 28 sidewall 32 against the action of the coil springs 46. Third, means must be provided to compress the hold-down coil springs 46, to permit adjustment for leveling the bearing plate 34, and to provide access enabling the annular portions 62 of the extension tube 26 to be expanded into the upper retainers 50. If the lower retainers 48 are collars having scallops 56, as shown in Fig. 2, a fourth requirement to be met would be to provide means for assuring that the lower retainers 48 are angularly positioned to radially align their peripheral scallops 56 with fuel rods 18 grouped about the respective guide thimbles 14 in order that such fuel rods can be removed and replaced during reconstitution of the fuel assembly.

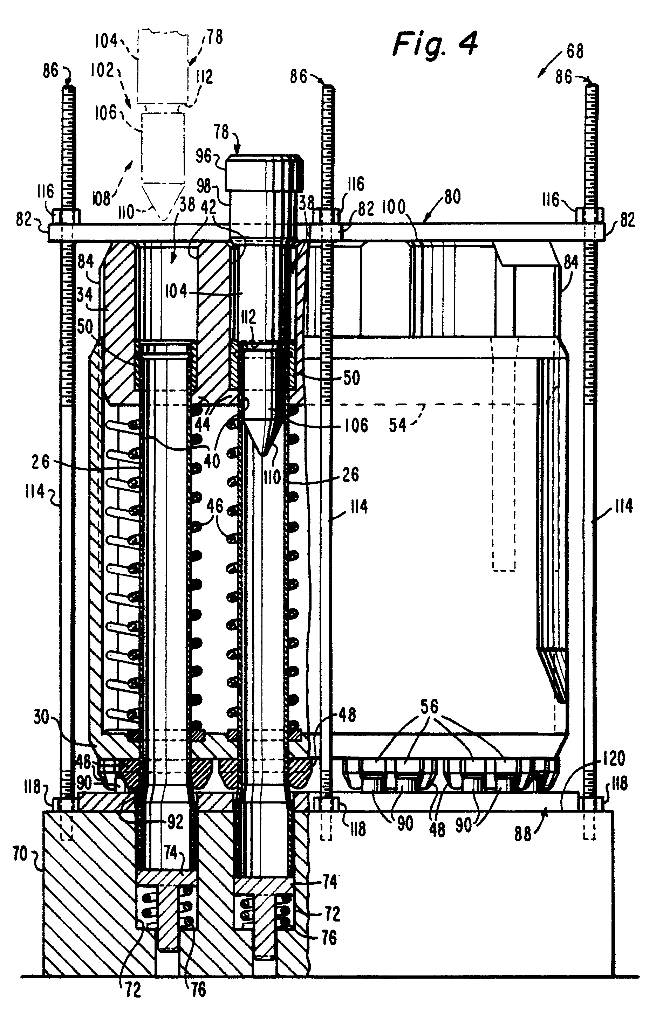

The first requirement is met by means of the spring-loaded pistons 74 in the bores 72 of the base 70. Each bore 72 has a size enabling it to freely receive a lower end portion of the associated extension tubes 26, when inserted therein through the aligned hole 36 in the adapter plate 30, the spring-loaded piston 74 within the bore yieldably supporting the extension tube 26 axially. Thus, with all of the lower retainers 48 affixed to the respective extension tubes 26 below the adapter plate 30, and with the extension tubes 26 freely slidable in the holes 36 of the adapter plate 30 and yieldably supported by the pistons 74, the tubes 26 can be vertically moved independently of one another so as to enable the lower retainers 48 on all of the tubes to be brought individually into engagement with the lower surface 58 of the adapter plate 30, thereby ensuring substantially uniform support of the adapter plate 30 over the full extent thereof. More particularly, and referring to Figs. 3 and 4, when the bearing plate 34 is depressed, it acts through the springs 46 to force the adapter plate 30 against the lower retainers 48 on the tubes 26. Assuming that due to normal manufacturing tolerances the retainers 48 are not all at exactly the same level, the lower surface 58 of the downwardly moving adapter plate 30 will engage first the retainers 48 at the highest level and then successively those at the lower levels, the compliant means 74, 76 allowing the adapter plate 30, upon engagement thereof with the retainers 48 at each level to depress the latter together with their associated extension tubes 26 to the next lower level until the lower surface 58 of the adapter plate 30 makes physical contact with the retainers 48 on all extension tubes 26. The compliant action of the spring-loaded pistons 74 is illustrated in Figs. 3 and 4 wherein one of the pistons is shown depressed more than the others. It will be appreciated that instead of providing soft compliance by means of coil springs, such as the springs 76 employed in the illustrated embodiment, other compliant means could be utilized, such as stacked Belleville washers, rubber pads, or the like.

The second requirement is met through the function concurrently performed by the locating pins 78. As seen from Figs 3 to 5, each of the pins 78 includes an upper portion 94, consisting of a head 96 and a neck 98 for supporting the pin 78 on the bearing plate 34 stationarily relative thereto. Since the head 96 is larger in diameter and the neck 98 is smaller in diameter than the counterbore 42, the head 96 will rest upon the upper surface 100 of the bearing plate 34, while the neck 98 will extend within an upper portion of the associated counterbore 42. Each of the pins 78 includes also a lower portion 102 consisting of an upper body 104 and a lower body 106 which are insertable through the upper counterbore 42 and lower bore 40 and into the upper end portion of the associated extension tube 26 so as to define a guideway or entry channel 108 (see the pins 78 shown in phantom in Figs. 3 and 4) for the upper end of the extension tube into the passageway 38 and within the upper retainer 50 seated therein on the ledge 44. Since the upper and lower bodies 104, 106 are both smaller in diameter than the bore 40 and the internal diameter of the retainer 50 on the ledge 44, both bodies are axially movable through the passageway 38 and the upper retainer 50 therein. Since the diameters of the upper and lower bodies 104, 106 of the pin 78 are the same as the outside diameter and the inside diameter, respectively, of the tube 26, the annular space about the lower body 106 occupied by the upper end of the tube 26 defines the aforementioned entry channel 108 for the tube 26 into the passageway 38 as the bearing plate 34 is moved from its position shown in Fig. 3 downwardly toward the adapter plate 30 against the bias of the coil springs 46, upon which the upper bearing plate 34 is initially positioned, to the position shown in Fig..4.

Although only one locating pin 78 is illustrated in Figs. 3 and 4, it will be understood that all of the pins (sixteen in the illustrated embodiment) are inserted into the respective passageways 38 of the upper bearing plate 34 to initially set up the apparatus 68. Specifically, when the bearing plate 34 is initially set down upon the hold-down springs 46, a gap exists between the upper ends of the extension tubes 26 and the lower surface 54 of the bearing plate 34. When the pins 78 are inserted into the passageways 38, their lower bodies 106 project below the bearing plate 34 while their heads 102 rest upon the upper surface 100 thereof. The lower body 106 of each pin 78 has a tapered end 110 which leads into the extension tube 26. As the bearing plate 34 is depressed toward the adapter plate 30, the upper end of each extension tube 26 eventually engages a shoulder 112 formed by the transition between the lower and upper bodies 106, 104, and lifts the pin 78 partially out of the associated passageway 38, as shown in Fig. 4, before the upper end portion of the extension tube 26 is completely positioned within the retainer 50 seated in the passageway 38. The pins 78 thus lifted can then be easily removed from the bearing plate 34 to permit a suitable tool (not shown) to be inserted into each passageway 38 for the purpose of forming a bulge, as at 62 (Fig. 1) affixing the extension tube to the retainer 50 seated in the passageway 38.

The third requirement mentioned above is met by means of the cruciform loading plate 80 and the adjustable means 86. The cruciform plate 80 is placed upon the upper surface 100 of the bearing plate 34, its cruciform configuration enabling it to overlie the bearing plate without obstructing any of the passageways 38, and thereby permitting the locating pins 78 and bulging tools (not shown) to be inserted into the passageways 38. The cruciform shape of the loading plate 80 also facilitates the application, at the lateral sides 84 of the bearing plate 34, of separate components of the loading force required to move the bearing plate 34 toward the adapter plate 30 against the action of the coil springs 46, which manner of applying the loading force permits the bearing plate 34 to be leveled relative to the adapter plate 30 concurrently with compressing the coil springs 46 and with inserting the upper ends of the extension tubes 26 into the retainers 50 within the passageways 38 of the loading plate 34.

As seen from Figs. 3 and 4, the adjustable means 86 comprise four threaded studs or rods 114 extending through openings in the respective end portions 82 of the cruciform loading plate 80 and threaded into the base 70 to which they are locked by nuts 118, and threaded fasteners 116 threadedly with upper end portions of the respective rods 114. By advancing the fasteners 116 and the rods 114, the loading plate 80 and, consequently, the bearing plate 34 beneath it are forced downward and toward the adapter plate 30, a level disposition of the bearing plate 34 being readily maintained through appropriate use of the fasteners 116 as the latter are operated to advance the loading plate. Once the correct height of the bearing plate 34 above the adapter plate 30 is reached, such as seen from Fig. 4, the locating pins 78 are removed and a suitable bulge tool (not shown) is used to expand the bulges 62 (Fig. 1) on upper end portions of the extension tubes 26 into the annular grooves 60 of respective retainers 50.

The fourth of the above-mentioned requirements is met by means of the orientation plate 88 and the alignment pins 90 thereon. The alignment pins 90 provide a visual go/no-go check for ensuring that the angular position of each extension tube 26 together with the lower retainers 48 thereon is correct. The orientation plate 88 (see also Fig. 6) is disposed between the upper surface 120 of the base 70 and the lower surface 58 of the adapter plate 30. In the illustrated embodiment, the plate 88 has sixteen openings 92 through which the extension tubes 26 extend, and two alignment pins 90 adjacent each of the openings 92. The pins 90 are positioned such that, when the bearing plate 34 is lowered and the heads or uppermost ends of the pins 90 properly enter a pair of the scallops 56 defined on the periphery of the respective retainer 48, the angular position of the latter is correct. On the other hand, if a given retainer 48 strikes the associated pins 90 upon being lowered, this is an indication to the effect that the retainer is angularly misaligned, whereupon its angular position can be readily corrected simply by rotating the associated extension tube 26 until two of the scallops 56 of its lower retainer 48 are properly aligned with the pins 90 enabling them to enter.

From the foregoing description it will be apparent that the preassembling apparatus 68 embodying the invention meets the four above-mentioned requirements for achieving a proper assembly of the top nozzle components as a complete subassembly ready to be subsequently applied to the skeleton of a fuel assembly.

## Claims

1. An apparatus for preassembling a top nozzle subassembly for subsequent mounting thereof on a plurality of guide thimbles of a fuel assembly, characterized by the combination comprising:

(a) a base (70) having a plurality of bores (72) formed therein in a pattern matching the pattern of said guide thimbles (14), each of said bores (72) being adapted to receive a lower end portion of one of a plurality of guide-thimble extension tubes (26);

(b) compliant means (74, 76) disposed in said bores (72) of the base (70) for yieldably supporting said extension tubes (26) individually so as to permit vertical movement thereof when the extension tubes are inserted through respective holes (36) formed in a lower adapter plate (30) in said pattern matching that of the guide thimbles, said extension tubes having thereon lower retainers (48) which are affixed to the respective extension tubes below said adapter plate (30) and which limit downward movement of said latter along said extension tubes (26), the arrangement being such as to enable the extension tubes (26) to vertically move independently of one another until all of their respective lower retainers (48) thereon are brought individually into engagement with a lower surface (58) of the adapter plate (30) so as to support the latter uniformly on all of said lower retainers (48);

(c) locating means (78) insertable through passageways (38) formed in an upper bearing plate (34) in said pattern matching that of the guide thimbles (14), and insertable into upper end portions of the extension tubes (26) so as to align said passageways (38) individually with the respective extension tubes (26) and to guide said upper end portions of the extension tubes into said passageways (38) while said upper bearing plate (34) is supported on a plurality of coil springs (46) disposed about the respective extension tubes (26) and on said lower adapter plate (30), and while said bearing and adapter plates (30, 34) are moved relative to and toward one another against the bias of said coil springs (46) to compress the latter; and

(d) loading means (80, 86) operable to generate a force effecting relative movement of said upper bearing and lower adapter plates (34, 30) with respect to and toward one another, and thereby effecting compression of the coil springs (46) therebetween while the bearing plate (34) is supported on the coil springs (46) and said locating means (78) extend through said passageways (38) of said bearing plate (34) and into said upper end portions of the extension tubes (26), whereby said upper end portions of the extension tubes (26) are introduced into said passageways (38) of the upper bearing plate (34) for attachment thereof to upper retainers (48) which cooperate with the bearing plate so as to limit upward movement thereof relative to the extension tubes (26) and thereby hold the coil springs (46) between the adapter and bearing plates in a state of compression.

2.  A preassembling apparatus according to claim 1, characterized in that said compliant means (74, 76) comprise a plurality of pistons (74) each disposed within one of said bores (72) in the base (70) so as to individually support the extension tube (26) having its lower end inserted in the bore, and a plurality of springs (76) each associated with one of said pistons (74) and biasing same in an upward direction.

3.  A preassembling apparatus according to claim 1 or 2, characterized in that said locating means (78) comprise a plurality of pins (78) each having an upper portion (94) for seating the pin upon the upper bearing plate (34) and for positioning the pin coaxially with respect to one of said passageways (38) in the bearing plate, and a lower portion (102) insertable through said passageway (38) and into the upper end portion of the extension tube (26), said passageway and said lower portion (102), when inserted therein, defining therebetween an entry channel (108) enabling the upper end portion of the extension tube to be inserted into said passageway (38).

4.  A preassembling apparatus according to claim 1, 2 or 3, characterized in that said loading means (80, 86) comprises a loading plate (80) disposed upon said upper bearing plate (34) in overlying relation with respect thereto, and means (86) interconnecting said loading plate (80) with said base (70) and adjustable to effect movement of the loading plate (80) toward said base (70), and thereby to effect movement of the upper bearing plate (34) toward the lower adapter plate (30) and compression of said coil springs (46) therebetween.

5.  A preassembling apparatus according to claim 4, characterized in that said loading plate (80) is of cruciform shape with end portions (82) thereof projecting beyond different lateral sides (84) of the upper bearing plate (34), and the interconnecting means (86) comprised of a plurality of elongate rods (114) with adjustable fasteners (116) thereon, each of said rods (114) extending between said base (70) and one of said end portions (82) of the cruciform loading plate, and said fasteners (116) being individually adjustable on the respective rods (114) so as to apply separate loading force components at the lateral sides (84) of the bearing plate (34), the arrangement being such as to permit leveling adjustment of the bearing plate (34) relative to the adapter plate (30) to be made concurrently with compressing said springs (46) between the adapter and bearing plates (30, 34).

6.  A preassembling apparatus according to any one of the preceding claims, characterized in that said combination includes orienting means (88, 90) disposed between said base (70) and the lower surface (58) of said adapter plate (30) for ensuring proper orientation of each extension tube (26) together with the lower retainer (48) thereon in a predetermined angular position in which peripheral scallops (56) formed on each lower retainer (48) are axially aligned with fuel rods (18) around the respective guide thimble (14) of said fuel assembly (10) when the preassembled top nozzle subassembly (22) is mounted thereon.

7.  A preassembling apparatus according to claim 6, characterized in that said orienting means (88, 90) comprise an orientation plate (88) disposed between said base (70) and the lower surface (58) of said adapter plate (30), said plate (88) having formed therein a plurality of openings (92) for receiving the respective extension tubes (26), and at least two alignment pins (90) disposed on and extending upward from said orientation plate (88) adjacent each of said openings (92) so as to register with two of the scallops (56) of the associated lower retainer (48) only when the latter is disposed in said predetermined angular position.

8.  A method of preassembling a top nozzle subassembly for subsequent mounting thereof on a plurality of guide thimbles of a fuel assembly, characterized by the steps of:

    (a) yieldably supporting a plurality of guide thimble extension tubes (26) individually at their respective lower ends so as to permit vertical movement thereof enabling, when the tubes (26) are slidably received through respective holes (36) in a lower adapter plate (30), lower retainers (48) affixed to the respective tubes below said adapter plate (30) to be brought individually into engagement with a lower surface (58) of said adapter plate (30);

(b) aligning individual passageways (38) in an upper bearing plate (34) axially with upper end portions of the respective extension tubes (26);

(c) guiding said upper end portions of the extension tubes for insertion into said passageways (38) while said bearing plate (34) is supported on a plurality of coil springs (46) disposed about said respective extension tubes (26) and supported on said lower adapter plate (30); and

(d) generating a loading force effecting relative movement of said bearing and adapter plates (34, 30) toward one another and hence compression of the coil springs (46) therebetween, thereby to insert said upper end portions of the extension tubes (26) into said passageways (38) for attachment thereof to upper retainers (48) disposed in the passageways and cooperating with the bearing plate (34) in a manner limiting upward movement thereof relative to said extension tubes (26) and thereby holding said coil springs (46) in a state of compression.

9. A preassembling method according to claim 8, characterized by the additional step of orienting each of said extension tubes (26) together with the lower retainer (48) thereon so as to place the latter in a predetermined angular position in which peripheral scallops (56) on the lower retainer (48) are axially aligned with fuel rods (18) of said fuel assembly (10) when the preassembled top nozzle subassembly is mounted thereon.

10. A preassembling method according to claim 8 or 9, characterized in that said loading-force generating step consists in generating separate components of said loading force at the respective lateral sides (84) of said upper bearing plate (34) so as to level the upper bearing plate (34) relative to said lower adapter plate (30) concurrently with compressing said springs (46) between the adapter and bearing plates (30, 34).

**Revendications**

1. Appareil pour préassembler un sous-ensemble de buses supérieures pour le montage ultérieur de celui-ci sur une pluralité de chaussettes de guidage d'un assemblage combustible, **caractérisé** par la combinaison comportant :

(a) une base (70) ayant une pluralité de perçages (72) formés à l'intérieur de celle-ci selon un motif correspondant au motif desdites chaussettes de guidage (14), chacun desdits perçages (72) étant adapté pour recevoir une partie d'extrémité inférieure de l'un d'une pluralité de tube (26) d'extension de chaussette de guidage;

(b) des moyens élastiques (74, 76) disposés dans lesdits perçages (72) de la base (70) de façon à supporter de façon souple lesdits tubes d'extension (26) individuellement de façon à permettre le déplacement vertical de ceux-ci lorsque les tubes d'extension sont insérés à travers des trous respectifs (36) formés dans une plaque d'adaptation inférieure (30) selon ledit motif, correspondant à celui des chaussettes de guidage, lesdits tubes d'extension ayant sur eux des dispositifs de maintien inférieurs (48) qui sont fixés aux tubes d'extension respectifs en dessous de ladite plaque d'adaptation (30) et qui limitent le déplacement vers le bas de cette dernière le long desdits tubes d'extension (26), la disposition étant telle qu'elle permet aux tubes d'extension (26) de se déplacer verticalement indépendemment l'un de l'autre jusqu'à ce que la totalité de leurs dispositifs de maintien inférieurs respectifs (48) sur ceux-ci soient mis individuellement en situation d'engrènement avec une surface inférieure (58) de la plaque d'adaptation (30) de façon à supporter cette dernière uniformément sur la totalité desdits dispositifs de maintien inférieurs (48) ;

(c) des moyens de positionnement (78) pouvant être insérés à travers des chemins de passage (38) formés sur une plaque de support supérieure (34) selon ledit motif correspondant à celui des chaussettes de guidage (14), et pouvant être insérés dans des parties d'extrémité supérieures des tubes d'extension (26) de façon à aligner lesdits chemins de passage (38) individuellement avec les tubes d'extension respectifs (26) et à guider lesdites parties d'extrémité supérieures des tubes d'extension dans lesdits chemins de passage (38), tandis que ladite plaque de support supérieure (34) est supportée sur une pluralité de ressorts hélicoïdaux (46) disposés autour des tubes d'extension respectifs (26) et sur ladite plaque d'adaptation inférieure (30), tandis que lesdites plaques de support et d'adaptation (30, 34) sont déplacées l'une par rapport à l'autre et l'une vers l'autre à l'encontre de la charge desdits ressorts hélicoïdaux (46) de façon à comprimer ces derniers ; et

(d) des moyens de charge (80, 86) pouvant être utilisés pour générer une force produisant un déplacement relatif desdites plaques de support supérieure et d'adaptation inférieure (34, 30) l'une par rapport à l'autre et l'une vers l'autre, et provoquant de ce fait la compression de ressorts hélicoïdaux (46) entre celles-ci, tandis que la plaque de support (34) est supportée sur les ressorts hélicoïdaux (46) et que lesdits moyens de positionnement (78) s'étendent à travers lesdits chemins de passage (38) de la plaque de support (34) et à l'intérieur desdites parties d'extrémité supérieures des tubes d'extension (26), grâce à quoi lesdites parties d'extrémité supérieures des tubes d'extension (26) sont introduites dans lesdits chemins de passage (38) de la plaque de support supérieure (34) pour la fixation de celle-ci à des dispositifs de maintien supérieurs (48) qui coopèrent avec la plaque de support de façon à limiter le déplacement vers le haut de celle-ci par rapport aux tubes d'extension (26) et à maintenir par conséquent les ressorts hélicoïdaux (46) entre les plaques d'adaptation et de support dans un état de compression.

2. Appareil de préassemblage selon la revendication 1, **caractérisé** en ce que lesdits moyens élastiques (74, 76) comportent une pluralité de pistons (74) disposés chacun à l'intérieur de l'un desdits perçages (72) dans la base (70) de façon à supporter individuellement le tube d'extension (26) ayant son extrémité inférieure insérée dans le perçage, et une pluralité de ressorts (76), associés chacun avec l'un desdits pistons (74) et chargeant ceux-ci dans une direction dirigée vers le haut .

3. Appareil de préassemblage selon la revendication 1 ou 2, **caractérisé** en ce que lesdits moyens de positionnement (78) comportent une pluralité de broches (78) ayant chacune une partie supérieure (94) pour disposer la broche sur la plaque de support supérieure (34) et pour positionner la broche coaxialement par rapport à l'un desdits chemins de passage (38) dans la plaque de support, et une partie inférieure (102) pouvant être insérée à travers ledit chemin de passage (38) et à l'intérieur de la partie d'extrémité supérieure du tube d'extension (26), ledit chemin de passage et ladite partie inférieure (102), lorsqu'elle est insérée à

l'intérieur de celui-ci, définissant entre eux deux un canal d'entrée (108) permettant à la partie d'extrémité supérieure du tube d'extension d'être insérée dans ledit chemin de passage (38).

4. Appareil de préassemblage selon la revendication 1, 2 ou 3, **caractérisé** en ce que lesdits moyens de charge (80, 86) comportent une plaque de charge (80) disposée sur ladite plaque de support supérieure (34) en relation de recouvrement l'une par rapport à l'autre, et des moyens (86) interconnectant ladite plaque de charge (80) et ladite base (70) et pouvant être réglés de façon à permettre le mouvement de la plaque de charge (80) vers ladite base (70), et à produire par conséquent le déplacement de la plaque de support supérieure (34) vers la plaque d'adaptation inférieure (30) et la compression desdits ressorts hélicoïdaux (46) entre celles-ci.

5. Appareil de préassemblage selon la revendication 4, **caractérisé** en ce que ladite plaque de charge (80) a une forme cruciforme, les parties d'extrémité (82) de celle-ci s'étendant au-delà des différents côtés latéraux (84) de la plaque de support supérieure (34), et les moyens d'interconnexion (86) étant composés d'une pluralité de barres allongées (114) avec des dispositifs de fixation ajustables (116) sur celles-ci, chacune desdites barres (114) s'étendant entre ladite base (70) et l'une desdites parties d'extrémité (82) de la plaque de charge cruciforme, et lesdits dispositifs de fixation (116) étant ajustés individuellement sur les barres respectives (114) de façon à appliquer des composantes de force de charge séparées au niveau des côtés latéraux (84) de la plaque de support (34), la disposition étant telle qu'elle permet de réaliser le réglage de mise à niveau de la plaque de support (34) par rapport à la plaque d'adaptation concurremment avec la compression desdits ressorts (46) entre les plaques d'adaptation et de support (30, 34).

6. Appareil de préassemblage selon l'une quelconque des revendications précédentes, **caractérisé** en ce que ladite combinaison comporte des moyens d'orientation (88, 90) disposés entre ladite base (70) et la surface inférieure (58) de ladite plaque d'adaptation (30) pour garantir l'orientation appropriée de chaque tube d'extension (26) avec le dispositif de maintien inférieur (48) sur celui-ci en une position angulaire prédéterminée dans laquelle des échancrures périphériques (56) formées sur chaque dispositif de maintien inférieur (48) sont alignées axialement avec des barres de combustible (18) autour de la chaussette de guidage respective (14) dudit assemblage combustible (10) lorsque le sous-ensemble (22) de buses supérieures préassemblées est monté sur celle-ci.

7. Appareil de préassemblage selon la revendication 6, **caractérisé** en ce que lesdits moyens d'orientation (88, 90) comportent une plaque d'orientation (88) disposée entre ladite base (70) et la surface inférieure (58) de ladite plaque d'adaptation (30), ladite plaque (88) ayant, formée à l'intérieur de celle-ci, une pluralité d'ouvertures (92) pour recevoir les tubes d'extension respectifs (26) et au moins deux broches d'alignement (90) disposées sur ladite plaque d'orientation (88) et s'étendant vers le haut à partir de celle-ci au voisinage de chacune desdites ouvertures (92) de façon à être alignées avec deux des échancrures (56) du dispositif de maintien inférieur associé (48) uniquement lorsque ce dernier est disposé dans ladite position angulaire prédéterminée.

8. Procédé pour préassembler un sous-ensemble de buses supérieures pour le montage ultérieur de celui-ci sur une pluralité de chaussettes de guidage d'un assemblage combustible, **caractérisé** par les étapes suivantes :

(a) le fait de supporter de façon souple une pluralité de tubes (26) d'extension de chaussettes de guidage individuellement au niveau de leurs extrémités inférieures respectives de façon à permettre le déplacement vertical de ceux-ci, ce qui permet, lorsque les tubes (26) sont reçus par glissement à travers des trous respectifs (36) dans une plaque d'adaptation inférieure (30), à des dispositifs de maintien inférieurs (48) fixés aux tubes respectifs en dessous de ladite plaque d'adaptation (30) d'être mis individuellement en engrènement avec une surface inférieure (58) de ladite plaque d'adaptation (30) ;

(b) alignement de chemins de passage individuels (38) dans une plaque de support supérieure (34) axialement avec les parties d'extrémité supérieures des tubes d'extension respectifs (26) ;

(c) guidage desdites parties d'extrémité supérieures des tubes d'extension pour l'insertion à l'intérieur desdits chemins de passage (38) tandis que ladite plaque de support (34) est supportée sur une pluralité de ressorts hélicoïdaux (46) disposés autour desdits tubes d'extension respectifs (26) et supportée sur ladite plaque d'adaptation inférieure (30) ; et

(d) génération d'une force de charge provoquant un déplacement relatif desdites plaques de support et d'adaptation (34, 30) l'une vers l'autre, et, par conséquent, la compression des ressorts hélicoïdaux (46) entre celles-ci, afin d'insérer par conséquent lesdites parties d'extrémité supérieures des tubes d'extension (26) à l'intérieur desdits chemins de passage (38) pour la fixation de ceux-ci à des dispositifs de maintien supérieurs (48) disposés dans les chemins de passage et coopérant avec la plaque de support (34) d'une façon qui limite le déplacement vers le haut de celle-ci par rapport auxdits tubes d'extension (26) et maintenant par conséquent lesdits ressorts hélicoïdaux (46) dans un état de compression.

9. Procédé de préassemblage selon la revendication 8, **caractérisé** par l'étape additionnelle d'orientation de chacun desdits tubes d'extension (26) avec les dispositifs de maintien inférieurs (48) sur ceux-ci de façon à placer ces derniers dans une position angulaire prédéterminée dans laquelle des échancrures périphériques (56) sur le dispositif de maintien inférieur (48) sont axialement alignées avec des barres de combustible (18) dudit assemblage combustible (10) lorsque l'ensemble des buses supérieures préassemblées est monté sur celles-ci.

10. Procédé de préassemblage selon la revendication 8 ou 9, **caractérisé** en ce que ladite étape de génération d'une force de charge consiste en la génération de composantes séparées de ladite force de charge sur les côtés latéraux respectifs (84) de ladite plaque de support supérieure (34) de façon à établir le niveau de la plaque de support supérieure (34) par rapport à ladite plaque d'adaptation inférieure (30) concurremment à la compression desdits ressorts (46) entre les plaques d'adaptation et de support (30, 34).

**Ansprüche**

1. Vorrichtung zur Vormontage eines oberen Endstückes zum nachfolgenden Befestigen desselben an einer Mehrzahl von Führungsrohren eines Brennelements, gekennzeichnet durch die Kombination aus:

a) einer Grundplatte (70) mit einer Mehrzahl von Bohrungen (72), welche in einem mit dem Anordnungsmuster der Führungsrohre (14) zusammenpassenden Muster angeordnet sind, wobei jede Bohrung (72) zur Aufnahme eines unteren Endbereichs eines von einer Mehrzahl von Führungsrohr-Verlängerungsstücken (26) angepaßt ist;

b) in den Bohrungen (72) der Grundplatte (70) angeordneter Ausgleichseinrichtungen (74, 76) zum nachgiebigen Halten der einzelnen Verlängerungsstücke (26) derart, daß ihnen eine Vertikalbewegung ermöglicht ist, wenn sie durch entsprechende Bohrlöcher (36) eingesetzt werden, welche in einer unteren Paßplatte in dem mit dem Anordnungsmuster der Führungsrohre zusammenpassenden Muster gebildet sind, wobei die Verlängerungsstücke untere Halter (48) haben, welche jeweils an dem entsprechenden Verlängerungsstück unterhalb der Paßplatte (30) befestigt sind und welche die nach unten gerichtete Bewegung der Paßplatte entlang der Verlängerungsstücke (26) begrenzen, wobei die Anordnung so getroffen ist, daß die Verlängerungsstücke (26) unabhängig voneinander so lange vertikal beweglich sind, bis alle ihre entsprechenden unteren Halter (48) einzeln mit einer unteren Fläche (58) der Paßplatte (30) in Kontakt gebracht worden sind, um die Paßplatte gleichmäßig auf allen unteren Haltern (48) zu halten;

c) Positioniermitteln (78), welche durch in einer oberen Lagerplatte (34) in dem mit dem Anordnungsmuster der Führungsrohre (14) zusammepassenden Muster gebildete Durchgangsöffnungen (38) und in obere Endbereiche der Verlängerungsstücke (26) derart einsetzbar sind, daß die einzelnen Durchgangsöffnungen(38) mit den jeweiligen Verlängerungsstücken (26) ausrichtbar sind und daß die oberen Endbereiche der Verlängerungsstücke in die Durchgangsöffnungen (38) einführbar sind, während die obere Lagerplatte (34), welche durch eine Vielzahl von um die entsprechenden Verlängerungsstücke (26) herum angeordneten und auf der unteren Paßplatte (30) aufsitzenden Schraubenfedern (46) gehalten wird, und die Paßplatte (30) gegen den Druck der Schraubenfedern (46) relativ aufeinanderzu bewegt werden, um die Schraubenfedern (46) zusammenzudrücken; und

d) einer Spannvorrichtung (80, 86), durch welche eine Kraft ausübbar ist, welche die jeweilige Relativbewegung der oberen Lagerplatte und der unteren Paßplatte (34, 30) aufeinanderzu und dabei ein Zusammendrücken der dazwischen befindlichen Schraubenfedern (46) bewirkt, während die Lagerplatte (34) auf den Schraubenfedern (46) gehalten wird und sich die Positioniermittel (78) durch die Durchgangsöffnungen (38) der Lagerplatte (34) und in die oberen Endbereiche der Verlängerungsstücke (26) erstrecken, so daß die oberen Endbereiche der Verlängerungsstücke (26) in die Durchgangsöffnungen (38) der oberen Lagerplatte (34) zur Befestigung derselben an oberen Haltern (48) eingeführt werden, welche oberen Halter (48) mit der Lagerplatte derart zusammenwirken, daß eine nach oben gerichtete Bewegung derselben relativ zu den Verlängerungsstücken (26) begrenzt wird und daß die Schraubenfedern (46) zwischen Paßplatte und Lagerplatte unter Kompression gehalten werden.

2. Vormontage-Vorrichtung nach Anspruch 1, dadurch gekennzeichnet, daß die Ausgleichseinrichtung (74, 76) eine Mehrzahl von Kolben (74), welche jeweils in einer der Bohrungen (72) in der Grundplatte (70) derart angeordnet sind, daß sie das jeweilige Verlängerungsstück (26) stützen, dessen unteres Ende in die Bohrung eingeführt ist, und eine Mehrzahl von Federn (76) aufweist, welche jeweils einem der Kolben (74) zugeordnet sind und denselben nach oben vorspannen.

3. Vormontage-Vorrichtung nach Anspruch 1 oder 2, dadurch gekennzeichnet, daß die Positioniermittel eine Mehrzahl von Bolzen (78) aufweisen, welche jeweils einen oberen Bereich (94) zum Aufsetzen des Bolzens auf die obere Lagerplatte (34) und zur koaxialen Positionierung des Bolzens bezüglich einer der Durchgangsöffnungen (38) in der Lagerplatte und einen unteren Bereich (102) aufweisen, welcher durch die Durchgangsöffnung (38) und in den oberen Endbereich des Verlängerungsstückes (26) einführbar ist, wobei bei eingesetztem Bolzen zwischen Durchgangsöffnung und unterem Bolzenbereich (102) ein Zugangskanal (108) gebildet ist, welcher dem oberen Endbereich des Verlängerungsstückes ermöglicht, in die Durchgangsöffnung (38) eingeführt zu werden.

4. Vormontage-Vorrichtung nach einem der Ansprüche 1, 2 oder 3, dadurch gekennzeichnet, daß die Spannvorrichtung (80, 86) eine auf der oberen Lagerplatte (34) angeordnete und diese überdeckende Spannplatte (80) und Mittel (86) aufweist, welche die Spannplatte (80) und die Grundplatte (70) miteinander verbinden und zur Erzeugung der Bewegung der Spannplatte (80) zur Grundplatte (70) hin verstellbar sind, so daß eine Bewegung der oberen Lagerplatte (34) zur unteren Paßplatte (30) hin und ein Zusammendrücken der dazwischenliegenden Schraubenfedern (46) bewirkt wird.

5. Vormontage-Vorrichtung nach Anspruch 4, dadurch gekennzeichnet, daß die Spannplatte (80) kreuzförmig ist, wobei Endbereiche (82) derselben über verschiedene Seiten (84) der oberen Lagerplatte (34) überstehen, und daß die Verbindungsmittel (86) aus einer Mehrzahl von länglichen Stäben (114) mit daran angeordneten verstellbaren Befestigungselementen (116) bestehen, wobei sich die Stäbe (114) zwischen der Grundplatte (70) und einem der Endbereiche (82) der kreuzförmigen Spannplatte erstrecken und die Befestigungselemente (16) einzeln auf den entsprechenden Stäben (114) derart verstellbar sind, daß separate Spannkraftkomponenten an den Seiten der Lagerplatte (34) aufbringbar sind, wobei die Anordnung so getroffen ist, daß eine ausgleichende Verstellung der Lagerplatte (34) relativ zur Paßplatte (30) ermöglicht wird, was gleichzeitig mit dem Zusammendrücken der Federn (46) zwischen der Paßplatte und der Lagerplatte (30, 34) geschieht.

6. Vormontage-Vorrichtung nach einem der vorstehenden Ansprüche, dadurch gekennzeichnet, daß die Kombination weiterhin zwischen der Grundplatte (70) und einer unteren Fläche (58) der Paßplatte (30) angeordnete Orientierungsmittel (88, 90) aufweist, welche zur Sicherung einer geeigneten Orientierung jedes Verlängerungsstücks (26) zusammen mit dem daran angeordneten unteren Halter (48) in einer bestimmten Winkelposition vorgesehen sind, in welcher an jedem unteren Halter (48) gebildete, umfängliche bogenförmige Ausschnitte (56) mit Brennstäben (18) axial ausgerichtet sind, welche um das jeweilige Führungsrohr (14) des Brennelements (10) herum angeordnet sind, wenn das vormontierte oberste Endstück (22) daran befestigt ist.

7. Vormontage-Vorrichtung nach Anspruch 6, dadurch gekennzeichnet, daß die Orientierungsmittel (88, 90) eine zwischen der Grundplatte (70) und der unteren Fläche (58) der Paßplatte (30) angeordnete Orientierungsplatte (88) in welcher eine Mehrzahl von Öffnungen (92) zur Aufnahme der jeweiligen Verlängerungsstücke (26) gebildet sind, und mindestens zwei Ausrichtungsbolzen (90) aufweist, welche auf der Orientierungsplatte (88) neben jeder der Öffnungen (92) derart angeordnet sind und sich von dort aus nach oben erstrecken, daß sie in zwei der bogenförmigen Ausschnitte (56) des entsprechenden unteren Halters (48) nur dann einpassen, wenn letzterer in der bestimmten Winkelposition angeordnet ist.

8. Verfahren zur Vormontage eines oberen Endstücks zur nachfolgenden Montage desselben auf eine Mehrzahl von Führungsrohren eines Brennelements, gekennzeichnet durch die Verfahrensschritte:

   a) nachgiebiges, einzelnes Halten einer Mehrzahl von Führungsrohr-Verlängerungsstücken (26) an deren entsprechenden unteren Enden derart, daß eine Vertikalbewegung derselben ermöglicht ist, wenn die Verlängerungsstücke (26) gleitend durch entsprechende Bohrlöcher (36) in einer unteren Paßplatte (30) aufgenommen sind, wobei untere Halter (48) mit den entsprechenden Verlängerungsstücken unterhalb der Paßplatte (30) befestigt sind, um mit einer unteren Fläche (58) der Paßplatte (30) in Kontakt gebracht zu werden;

   b) axiales Ausrichten einzelner in einer oberen Lagerplatte (34) gebildeter Durchgangsöffnungen (38) mit oberen Endbereichen der entsprechenden Verlängerungsstücke (26);

   c) Führen der oberen Endbereiche der Verlängerungsstücke, um sie in die Durchgangsöffnungen (38) einzusetzen, wobei die Lagerplatte (34) auf einer Mehrzahl von um die entsprechenden Verlängerungsstücke (26) herum angeordneten und auf der unteren Paßplatte (30) aufsitzenden Schraubenfedern (46) getragen ist; und

   d) Erzeugen einer Spannkraft, welche eine Relativbewegung der Lagerplatte und der Paßplatte (34, 30) aufeinanderzu und somit ein Zusammendrücken der dazwischen angeordneten Schraubenfedern (46) bewirkt, wobei die oberen Endbereiche der Verlängerungsstücke (26) in die Durchgangsöffnungen (38) eingeführt werden, damit sie an in den Durchgangsöffnungen angeordneten oberen Haltern (48) befestigt werden, welche oberen Halter (48) mit der Lagerplatte (34) in einer Weise zusammenarbeiten, daß eine nach oben gerichtete Bewegung derselben relativ zu den Verlängerungsstücken (26) begrenzt und somit die Schraubenfedern (46) unter Kompression gehalten werden.

9. Vormontage-Verfahren nach Anspruch 8, gekennzeichnet durch den zusätzlichen Verfahrensschritte, jedes Verlängerungsstück (26) zusammen mit dem daran angeordneten unteren Halter (48) derart zu orientieren, daß der untere Halter in einer bestimmten Winkelposition angeordnet wird, in welcher am unteren Halter (48) gebildete, umfängliche bogenförmige Ausschnitte (56) axial mit Brennstäben (18) des Brennelements (10) ausgerichtet sind, wenn das vormontierte obere Endstück darauf befestigt wird.

10. Vormontage-Verfahren nach Anspruch 8 oder 9, dadurch gekennzeichnet, daß der Verfahrensschritt des Erzeugens der Spannkraft aus der Erzeugung separater Spannkraftkomponenten an den entsprechenden Seiten (84) der oberen Lagerplatte (34) besteht, sodaß die obere Lagerplatte (34) bezüglich der unteren Paßplatte (30) ausgleichbar ist, während gleichzeitig die zwischen der Paßplatte und der Lagerplatte (30, 34) angeordneten Federn (46) zusammengedrückt werden.

**Fig. 1**

## Fig. 2

## Fig. 5

Fig. 3

*Fig. 4*

# Fig. 6